# EUROPEAN PATENT SPECIFICATION

(11) **EP 4 163 895 B1**
(45) Date of publication and mention of the grant of the patent: **12.11.2025**
(21) Application number: 22198713.4
(22) Date of filing: 29.09.2022
(51) Int. Cl.: G08G 1/01, B60Q 1/50, B60W 30/09, B60W 50/14, G08G 1/052, G08G 1/0967, G08G 1/16, H04W 4/44, H04W 4/46

(54) **PRE-CRASH DENM MESSAGE WITHIN AN INTELLIGENT TRANSPORT SYSTEM**
PRE-CRASH-DENM-NACHRICHT INNERHALB EINES INTELLIGENTEN TRANSPORTSYSTEMS
MESSAGE DE DÉCENDRAGE PRÉALABLE DANS UN SYSTÈME DE TRANSPORT INTELLIGENT

(30) Priority: 06.10.2021 GB 202114312
(43) Date of publication of application: 12.04.2023
(73) Proprietor: Canon Kabushiki Kaisha, Ohta-ku Tokyo 146-8501 (JP)
(72) Inventor: MORVAN, Isabelle, 35135 CHANTEPIE (FR); NASSOR, Eric, 35235 THORIGNE-FOUILLARD (FR); RUELLAN, Hervé, 35700 RENNES (FR); TOCZE, Lionel, 35190 SAINT DOMINEUC (FR); LE HOUEROU, Brice, 35690 ACIGNE (FR)
(74) Representative: Casalonga

(56) References cited:
- EP-A2- 3 829 200
- US-A1- 2011 298 603
- US-A1- 2019 268 447
- STANDARD EUROPEAN: "Intelligent Transport Systems (ITS); Vehicular Communications; Basic Set of Applications; Part 3: Specifications of Decentralized Environmental Notification Basic Service", 1 April 2019 (2019-04-01), pages 2019 - 4, XP055934958, Retrieved from the Internet <URL:https://www.etsi.org/deliver/etsi_en/302600_302699/30263703/01.03.01_60/en_30263703v010301p.pdf> [retrieved on 20220623]
- "Intelligent Transport Systems (ITS); Vehicular Communications; Basic Set of Applications; Analysis of the Collective Perception Service (CPS); Release 2", vol. ITS WG1, no. V2.1.1, 18 December 2019 (2019-12-18), pages 1 - 119, XP014360260, Retrieved from the Internet <URL:http://www.etsi.org/deliver/etsi_tr/103500_103599/103562/02.01.01_60/tr_103562v020101p.pdf> [retrieved on 20191218]
- CAR 2 CAR COMMUNICATION CONSORTIUM: "CAR 2 CAR Communication Consortium Triggering Conditions and Data Quality Pre-Crash Information CAR 2 CAR Communication Consortium About the C2C-CC", 16 December 2020 (2020-12-16), XP093024322, Retrieved from the Internet <URL:https://www.car-2-car.org/fileadmin/documents/Basic_System_Profile/Release_1.5.2/C2CCC_RS_2066_Pre-CrashInformation.pdf> [retrieved on 20230215]
- ANONYMOUS: "Intelligent Transport Systems (ITS); Vehicular Communications; Basic Set of Applications; Part 2: Specification of Cooperative Awareness Basic Service", vol. ITS WG1, no. V1.4.1, 2 April 2019 (2019-04-02), pages 1 - 45, XP014344330, Retrieved from the Internet <URL:http://www.etsi.org/deliver/etsi_en/302600_302699/30263702/01.04.01_60/en_30263702v010401p.pdf> [retrieved on 20190402]

## Description

### FIELD OF THE INVENTION

The present invention relates generally to Intelligent Transport Systems (ITS) and more specifically to Cooperative Intelligent Transport Systems (C-ITS).

### BACKGROUND OF INVENTION

Cooperative Intelligent Transport Systems (C-ITSs) is an emerging technology for future transportation management that aims at improving road safety, traffic efficiency and drivers experience.

Intelligent Transport Systems (ITS), as defined by the European Telecommunications Standards Institute (ETSI), include various types of communication such as:
- communications between vehicles (e.g., car-to-car), and
- communications between vehicles and fixed locations (e.g., car-to-infrastructure).

C-ITSs are not restricted to road transport as such. More generally, C-ITSs may be defined as the use of information and communication technologies (ICT) for rail, water and air transport, including navigation systems. Such various types of C-ITSs generally rely on radio services for communication and use dedicated technologies.

Such C-ITSs are subject to standards, specified for each country and/or territory where C-ITSs are implemented. Today in Europe, the European Telecommunications Standards Institute (ETSI) is in charge of the elaboration of the specifications forming the standards to which C-ITSs are subjected.

Cooperation within C-ITSs is achieved by exchange of messages, referred as to ITS messages, among ITS stations (denoted ITS-Ss). The ITS-Ss may be vehicles, Road Side Units (RSUs), Vulnerable Road Users (VRUs) carrying an ITS equipment (for instance included in a smartphone, a GPS, a smart watch or in a cyclist equipment), or any other entities or infrastructures equipped with an ITS equipment, as well as central subsystems (back-end systems and traffic management centres).

C-ITSs may support various types of communications, for instance between vehicles (vehicle-to-vehicle or "V2V"), referring to all kinds of road users, e.g. car-to-car, or between vehicles and fixed locations such as vehicle-to-infrastructure or "V2I", and infrastructure-to-vehicle or "I2V", e.g., car-to-infrastructure.

Such messages exchanges may be performed via a wireless network, referred to as "V2X" (for "vehicle" to any kind of devices) networks, examples of which may include 3GPP LTE-Advanced Pro, 3GPP 5G or IEEE 802.11p technology.

Exemplary ITS messages include Collective Perception Messages (CPMs), Cooperative Awareness Messages (CAMs) and Decentralized Environmental Notification Messages (DENMs). The ITS-S sending an ITS message is named "originating" ITS-S.

ETSI TS 103 324 (V2.1.1 of December 2019) defines the Cooperative Awareness Service through which an ITS-S having on-board sensor systems detects objects in its vicinity and transmits, using broadcast CPMs, description information (e.g. dynamics such as position and/or kinematic information) thereof. The CPMs are sent periodically with a period from 100 ms to 1 s depending for example on the speed of the objects sensed by the originating ITS-S.

EN 302 637-2 (V1.4.1 of April 2019) defines the Cooperative Awareness Basic Service through which an ITS-S transmits, using broadcast CAMs, its ego-vehicle dynamics (e.g. position, speed).

EN 302 637-3 (V1.3.1 of April 2019) defines the Decentralized Environmental Notification Basic Service through which an originating ITS-S can send, using broadcast DENMs, notifications to other ITS-Ss, such as warnings or alerts. Such a message notifies an event (e.g. road hazard, driving environment, traffic condition) detected by the originating ITS-S.

An example of DENM warning can alert about a collision risk in a specific area. In that case, the vehicles can trigger various emergency procedures or functions (e.g. automatic emergency braking, forward collision warning, etc.).

The CAR 2 CAR Communication Consortium (C2C-CC), in its "Triggering Conditions and Data Quality Pre-Crash Information" publication, proposes a DENM Pre-Crash warning to alert about an imminent collision. An imminent collision is considered when the detected collision risk has a time to collision less than a predefined threshold, e.g. 1.5 s. A back vehicle detecting a crash risk with a front vehicle (using its on-board sensors and/or received ITS messages) warns the front vehicle of the imminent collision using the Pre-Crash DENM.

The proposed Pre-Crash message indicates the back vehicle and describes the critical front vehicle. The message thus advantageously allows the front vehicle to have all necessary information within a single message to determine it is concerned by the imminent collision and then to activate appropriate emergence procedures to prepare the vehicle and the passengers for the crash (warning lights on, window closing, automatic seat-belt tensioning, etc.)

The C2C-CC Pre-Crash DENM is only useful between two C-ITS-equipped vehicles that are in sight of each other.

This is not satisfactory for numerous situations of risks of collision or imminent collision.

It is also known, from publication US 2011/298603, a base station that sends a warning signal including vehicle identification of two or more vehicles having a probability exceeding the threshold of being in an imminent collision.

### SUMMARY OF THE INVENTION

The present invention has been devised to address one or more of the foregoing concerns.

It first proposes to define a collision-related DENM that allows other ITS-Ss, in particular RSUs, to quickly report collision risks for vehicles that may not be in sight of each other.

To that end, the invention provides a method of communication in an Intelligent Transport System in accordance with appended claim 1.

Correspondingly, the invention also provides a method of communication in an Intelligent Transport System in accordance with appended claim 2.

Such DENM allows an ITS-S not involved in the collision to report about the latter. Hence, ITS-Ss that have better views of monitored areas, such as RSUs, can warn about a collision, be it actual or predicted, independently to whether the colliding objects are in sight of each other. The receiving ITS-Ss can then analyse a collision or imminent collision risk with reduced processing time, using a single message.

Furthermore, the proposed format for the DENM is advantageously easy (and thus quick) to fill in as it may rely on a mere addition of object containers that may already been available at the (monitoring) originating ITS-S (in the environment model or "local dynamic map", LDM).

Optional features of the invention are defined below with reference to a method, while they can be transposed into device features.

In some embodiments, a causeCode field of the DENM is set to a Collision Risk or Accident value (for example as defined in ETSI EN 302 637-3 - section 7.1.4, causeCode = 2 or 97).

In specific embodiments, a subCauseCode field of the DENM is set to a PreCrash value (for example C2C-CC proposes value 5 when causeCode field is set to Collision Risk - 97) defining an imminent collision with a time to collision less than a threshold (e.g. 1.5 s).

In some embodiments, the originating ITS-S is a road-side unit. Such unit has usually better view of a monitored area and more powerful processing means, compared to vehicles. Therefore, it is suitable to detect risks of collision between various other objects and then to warn them as early as possible using the proposed DENM.

In some embodiments, at least one of the containers is a PerceivedObjectContainer as defined in ETSI TR 103 562 V2.1.1. In this situation, the DENM can be quickly filled in by retrieving objects from the environment model (or LDM).

In specific embodiments, each container is a PerceivedObjectContainer as defined in ETSI TR 103 562 V2.1.1.

In some embodiments, one of the containers includes a Station Identifier of the originating ITS-S. The (monitoring) originating ITS-S can declare itself, at low cost, as a colliding object.

In other embodiments, one of the containers includes a Station Identifier of an ITS-S separate from the originating ITS-S and obtained from a Cooperative Awareness Messages previously received from the separate ITS-S. The declaration of one colliding object can therefore be made at low cost, by referring to a station identifier. The processing of the DENM by a receiving ITS-S is also made simpler. This particularly applies for collision risks detected by a third-party station, between two objects, one of which being deprived of C-ITS (i.e. without ITS-S).

In other embodiments, one of the containers includes a classification field providing a classification of the described object. This allows for instance to describe objects that are not ITS-S.

In some embodiments, one of the containers includes coordinates of the corresponding described object as expressed in a local coordinate frame fixed to the originating ITS-S. The coordinates are for example expressed as distances, along each axis of the frame, from the originating ITS-S. More generally, plural relative information items (e.g. speed and acceleration in addition to the coordinates) can be added to the container.

In variants, the DENM includes an indication of a collision point.

In addition, the DENM may further include a container for each object perceived in an area surrounding the collision point. This DENM provides more indications, in particular about objects that are not directly involved in the collision. This advantageously provides additional information that can help a vehicle to take appropriate anti-collision measures (e.g. taking into account a bicycle or pedestrian).

In some embodiments, the DENM further includes a Collision Data container indicating one or more predicted trajectories of the objects and/or a cause of the collision. Such additional information allows receiving ITS-S to assess whether a predicted collision is about to happen, for instance by comparing its own trajectory with the corresponding predicted trajectory that resulted in the collision detection.

In some embodiments, the DENM includes a link to a previous DENM. Such a link allows the receiving ITS-S to easily retrieve additional information about the collision area, for instance by obtaining more perceived objects (e.g. pedestrian, bicycle) from a previous DENM. Better anti-collision measures can thus be taken.

In embodiments of the invention, the use of such a link to a previous DENM is not limited to the above collision warning DENM, and can link one DENM to any previous DENM providing containers describing objects.

The link may be a mere reference to the first DENM, such as an actionlD data frame (DF) or a sequence number therein that uniquely identifies the event of DENM as detected by the originating ITS-S.

As explained above, the link thus allows the receiving ITS-S to easily obtain additional information about objects in relation with the notified event. In the example of a collision event, the first DENM may provide a local map of the objects present in the collision area, in such a way the receiving ITS-S can take appropriate anti-collision measures given e.g. pedestrian, bicycle in its surroundings.

Optional features of the invention are defined below with reference to a method, while they can be transposed into device features.

Correlatively, the invention also provides an Intelligent Transport System, ITS, station, ITS-S comprising at least one microprocessor configured for carrying out any of the above methods. The wireless communication device may be either an originating ITS-S or a receiving ITS-S.

Another aspect of the invention relates to a non-transitory computer-readable medium storing a program which, when executed by a microprocessor or computer system in an Intelligent Transport System, ITS, station, ITS-S, causes the ITS-S to perform any method as defined above.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Further advantages of the present invention will become apparent to those skilled in the art upon examination of the drawings and detailed description. Embodiments of the invention will now be described, by way of example only, and with reference to the following drawings, in which:
**Figure 1** illustrates a typical Intelligent Transportation Systems (ITS) in which the invention may be implemented;
**Figure 2** illustrates a typical ITS station in which the invention may be implemented;
**Figure 3** illustrates an exemplary format of a DENM according to embodiments of the invention;
**Figure 4** schematically illustrates an exemplary Service Specific Permissions according to embodiments of the present invention;
**Figures 5a** and **5b** illustrate, using flowcharts, general steps of methods according to the invention respectively at an originating ITS-S sending a collision warning DENM and at a corresponding receiving ITS-S;
**Figures 6** illustrates, using a flowchart, more detailed steps of the method at the originating ITS-S according to embodiments of the invention;
**Figure 7** illustrates, using a flowchart, detailed steps to generate the various containers of DENM Parameters in a DENM message according to embodiments of the invention;
**Figure 8** illustrates an alternative scenario to **Figure 1** for an implementation of the present invention, where the originating ITS-S is a vehicle observing a pre-crash situation of two vehicles ahead, one of which having C-ITS communication while the other has not;
**Figure 9** shows a schematic representation an example of a communication ITS-S device configured to implement embodiments of the present invention.

### DETAILED DESCRIPTION OF THE INVENTION

The names of the lists and elements (such as data elements) provided in the following description are only illustrative. Other names could be used.

The embodiments of the present invention are intended to be implemented in an Intelligent Transportation Systems (ITS).

The present invention proposes a single DENM, i.e. a warning message announcing a detected event such as an accident/collision or a risk of collision or a pre-crash situation, conveys information about multiple objects involved in the detected situation, in particular about the critical objects involved in the collision.

The originating ITS station, ITS-S, sending such DENM can quickly build it because containers describing the objects it perceives are usually already built in memory, in a so-called Local Dynamic Map or Environment Model.

On the other side, the receiving ITS-S concerned by the collision (e.g. pre-crash) situation can obtain additional (compared to known technics) information from the single DENM combining multiple objects and transmitted more rapidly than CAMs or CPMs. It can then perform a quicker analysis of the situation and then decide earlier to activate or not anti-collision or pre-crash functions.

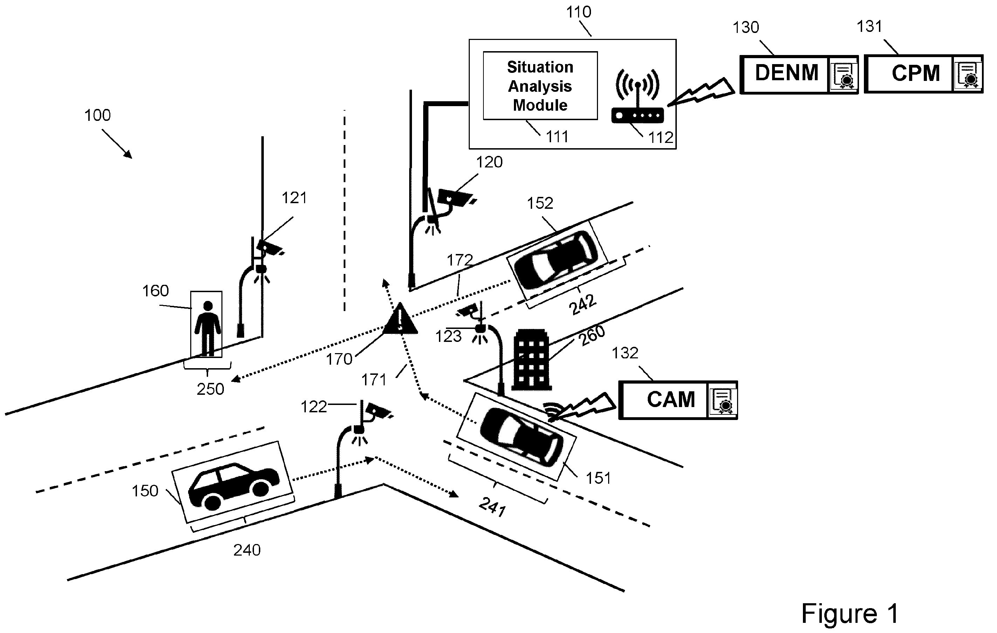

An example of an ITS system 100 for implementation of embodiments of the invention is illustrated in **Figure 1****.**

In this example, the originating ITS station, ITS-S, sending the DENM is a road-side unit, RSU. RSUs have advantageously more powerful resources to analyze a collision situation than moving vehicles: for example, it may have a wider field of view, multiple fields of view, fast access to other information such as traffic conditions, traffic light status, knowledge of objects that populate the monitored area, etc.

In particular, a better view of the monitored area allows an RSU to detect collisions or risks of collision when mixing connected and not connected colliding vehicles, and/or when colliding vehicles cannot see each other (e.g. due to an occlusion at an intersection), what is not achieved by the known technics such as C2C-CC.

ITS 100 is implemented at an intersection, and comprises a fixed road side unit 110, and several entities, such that all these entities may carry or comprise ITS station (ITS-S) each, for transmitting and/or receiving ITS messages within ITS 100. The several entities may be for example vehicles 240, 241 and 242.

Fixed road side unit 110 includes a set of sensors, such as image sensors here video cameras 120, 121, 122, 123, an analytical module to analyze data provided by the sensors, such as a Situation Analysis module 111. Video cameras 120, 121, 122 and 123 are configured to monitor or scan a monitored area, here the road intersection, and thus reproduced images of the monitored area.

The sensors and the analytical module, i.e. video cameras 120-123 and Situation Analysis module 111, are connected so that the Situation Analysis module 111 processes the stream captured by the sensors/video cameras. According to some embodiment, the analytical module and the sensors may be separate from or embedded within the same physical road side unit 110. For example, the analytical module may be wire-connected to the sensors that may be remote (i.e. not embedded in road side unit 110).

The processing by the analytical module, e.g. Situation Analysis module 111, aims at detecting objects potentially present in the monitored area, referred to as "perceived objects" or "detected objects" hereinafter. Mechanisms to detect such objects are well-known by one skilled in the art.

The analytical module, e.g. Situation Analysis module 111, is also configured to output a list of the perceived objects respectively associated with corresponding description information referred to as "state vector". The state vector for a perceived object may include for instance parameters such as position, kinematic, temporal, behavioural or object type classification information, etc.

Therefore, the analytical module may also identify, among the perceived objects, Vulnerable Road Users (VRU), such as pedestrians, cyclists as well as motorcyclists and also persons with disabilities or reduced mobility and orientation. It may also identify objects such as trees, road construction/work equipment (road barrier, ...), and so on.

The VRUs may be considered as ITS-S when carrying an ITS equipment, for example included in a smartphone, a GPS, a smart watch or in a cyclist equipment, etc.

For example, in the illustrated example, by scanning the monitored area, the Situation Analysis module 111 may perceive the following objects:
objects 150, 151 and 152 respectively corresponding to vehicles 240, 241 and 242 on the roadway. In the example, vehicles 241 and 242 arriving at the road intersection cannot see each other due to building 260;
object 160 corresponding to pedestrian 250 on the sidewalk.

Further, the perceived objects may be classified, for example, according to whether the ITS station is a vehicle, a VRU, or a RSU, or of another type. Such object type classification may be based for example on predetermined rules, provided during the setting up of road side unit 110, or more generally the ITS-S. ETSI TR 103 562 V2.1.1 defines for instance the categories "unknown", "vehicle", "person", "animal" and "other". Of course, other categories, more specific, can be defined.

The analytic module has some situation analysis function to analyze the trajectories of the perceived objects and is able to predict their future trajectories and analyze possible risks for the vehicles to have a collision. In the example shown in the Figure, perceived objects 151 and 152 are detected to have a risk to collide at collision position marked 170 in the center of the road intersection. The analytic module is able to predict the trajectories 171 and 172 of the two vehicles and to compute a time-to-collision TTC information.

TTC lower than a first threshold, e.g. 5 seconds, but greater than a second threshold, typically 1.5 second, means that a risk of collision is detected between the two or more objects.

TTC lower than the second threshold means an imminent collision or "pre-crash" situation is detected.

Road side unit 110 includes a Roadside ITS-S, R-ITS-S, 112 as specified in the reference architecture of an ITS station defined in version V1.1.1 of the ETSI EN 302 665 specification. By the means of road side ITS-S 112, RSU 110 can share information relative to the perceived objects. Typically, RSU 110 can share such information with receiving ITS stations by sending ITS messages, particularly the so-called Collective Perception Messages, CPMs, 131 defined in documents ETSI TR 103 562 and ETSI TS 103 324 and usually sent periodically.

In the description, the expression "originating ITS-S" and "receiving ITS-S" are used to respectively designate the ITS-S sending an ITS message, and the ITS-S receiving an ITS message.

RSU 110 can also share information about an accident or a risk of collision such as a pre-crash situation, by sending other ITS messages, particularly the so-called Decentralized Environmental Notification Message, DENM, 130 defined in document ETSI EN 302 637-3.

More generally, any ITS-S in ITS 100 can share information on the objects it perceives, by sending CPMs, as well as information on itself, by sending so-called Cooperative Awareness Messages, CAMs, 132 defined in document ETSI EN 302 637-2. CAMs may include position, kinematic (or dynamics), unique station identifier, temporal, behavioural or object type classification information, etc.

The ITS messages are usually broadcast by its originating ITS-S, so that any other ITS-S can exploit it.

All the messages exchanged over ITS 100 helps each ITS-S to have a good knowledge of its environment in terms of which objects are present, where and how they behave.

Although, in the proposed scenario of **Figure 1****,** RSU 110 is the observer reporting, through DENMs, an accident or a risk of collision such as a pre-crash situation, variants may contemplate having vehicle 240 be such reporting observer because it also has a good view of the road intersection.

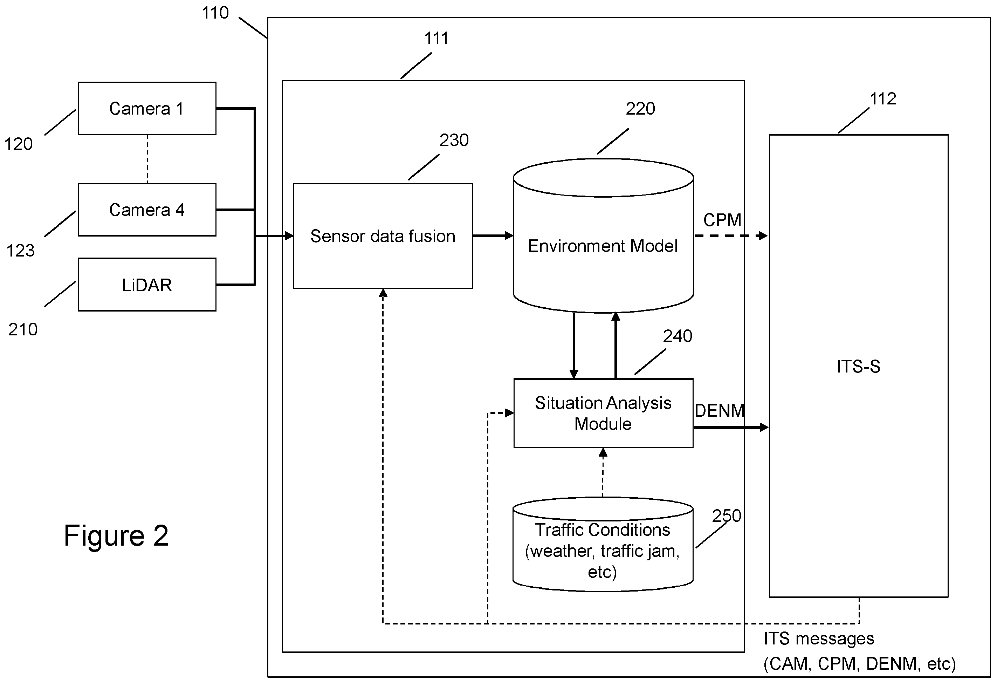

**Figure 2** illustrates a typical ITS station in which the invention may be implemented.

For the purpose of illustration, it is considered here RSU 110, any other type of ITS-S-equipped entity may be used.

As mentioned above, situation analytic module 111 is connected to one or more sensors monitoring the road intersection for example. These may include cameras 120-123 but also other sensors such as LIDARs (laser imaging detection and ranging devices) 210 or mere radars.

The perceived objects detected by each sensor are analyzed by Sensor data fusion module 230 in order to fuse or merge the same objects detected by several sensors. Consideration of similarity between objects from different sensors can be based on their object types, positions, kinetics/dynamics (speed, acceleration), trajectories, etc. A level of confidence may also be computed when scrutinizing the similarities of these information items and the fusion can be effected when the level of confidence is high enough.

Newly perceived objects or updates about already-tracked objects are used to update the environment model 220 of the ITS-S. CAMs 132 and CPMs 131, conveying additional information, can also be used to update environment model 220.

The Environment model is also known as the Local Dynamic Map and contains a list of the perceived objects. Each ITS-S has its own Environment model 220.

An object in Environment model 220 is defined together with multiple information items including all or part of:
- objectID: an identifier of the detected object,
- SensorlD (optional): a list of sensors that have perceived the object,
- timeOfMeasurement: a time when the (last) measurement was made,
- stationlD (optional): an ITS-S identifier associated with the perceived object, with a corresponding level of confidence. The confidence level can be computed based on the accuracy of a position contained in a received CAM (comprising an ITS ID) and the position measured by the local sensors. In a variant, it is computed based on the number of perceived objects versus the number of transmitting ITS-Ss for a zone,
- objectRefPoint (optional): a reference point corresponding to a reference point of the detected object. By default, the reference point is the centre point of the detected object,
- Distance: a distance determined according to a frame of reference fixed to the originating ITS-S, here RSU 110. For example, the distance is determined relatively to three directions x, y, z of the frame of reference, such that the distance is indicated within three fields xDistance, yDistance, zDistance, which represent together the distance between the perceived object and the originating ITS station's reference point at the time of measurement, with a corresponding level of confidence,
- Speed: a speed with respect to originating ITS station's reference point at the time of measurement. For example, the speed is determined relatively to three directions x, y, z of the frame of reference such that the speed is indicated within three fields xSpeed, ySpeed, zSpeed, representing together the speed of the detected object, with a corresponding level of confidence,
- Acceleration (optional): an acceleration with respect to originating ITS station's reference point at the time of measurement. For example, similarly to the speed, the acceleration is indicated within three fields xAcceleration, yAcceleration, zAcceleration relatively to the three directions of the frame of reference fixed to the originating ITS-S, with a corresponding level of confidence,
- dynamicStatus (optional): a dynamic Status providing the capabilities of the originating ITS-S to move away from the perceived object,
- planarObjectDimension (optional): a dimension indicating the dimensions of the perceived object. The dimension may be indicated within three fields planarObjectDimension1, planarObjectDimension2, verticalObjectDimension, and
- Classification (optional): a classification providing the classification of the perceived object, with a corresponding level of confidence.

For example, a CPM sent by an originating ITS-S wishing to share perceived object information includes containers (Perceived Object Containers), each listing such information for the corresponding perceived object.

Situation analysis module 240 continuously analyzes the trajectories of the objects contained in its environment model 220. This is to predict their future trajectories 171, 172 with a view of detecting risks of collision 170.

Any trajectory predicting method can be used, including those that optionally use additional information as inputs, such as traffic conditions (traffic jam, traffic light status, speed limits), weather conditions. A predicted trajectory is a set of predicted positions with associated position times defining when it is expected that the object be at the predicted position. Plural trajectories can be predicted for one and the same object, for instance by using various trajectory predicting methods.

Detection of collision can be based on such predicted trajectories: trajectories that cross each other (given a position margin) at the same time (given a time margin) can raise a risk of collision should said time be no later than a first threshold (e.g. 5 s) and later than a second threshold (e.g. 1.5 s), can raise a pre-crash situation should said time be no later than the second threshold or even raise an accident situation should said time be 0.

A collision can involve two or more objects, including one or multiple vehicles, a VRU, an animal, an object on the road or near the road (tree, road barrier, traffic light, ...). Those objects are labelled "critical" or "colliding" objects.

Each critical object contained in environment model 220 can thus be updated with those information items obtained from the prediction:
- Object predicted trajectory,
- Object collision-related situation: e.g. collision risk, pre-crash situation, accident situation.

Furthermore, situation analysis module 240 can decide to build a collision warning Decentralized Environmental Notification Message, DENM, for example upon detecting a change of collision-related situation or upon detecting a new pre-crash situation. The DENM defines the collision-related situation by including a description of the originating ITS-S (here RSU 110) and, in addition, two or more containers describing two or more perceived objects, respectively, for example but not necessarily objects involved in the collision. The DENM is conventionally sent by R-ITS-S 112 of RSU 110.

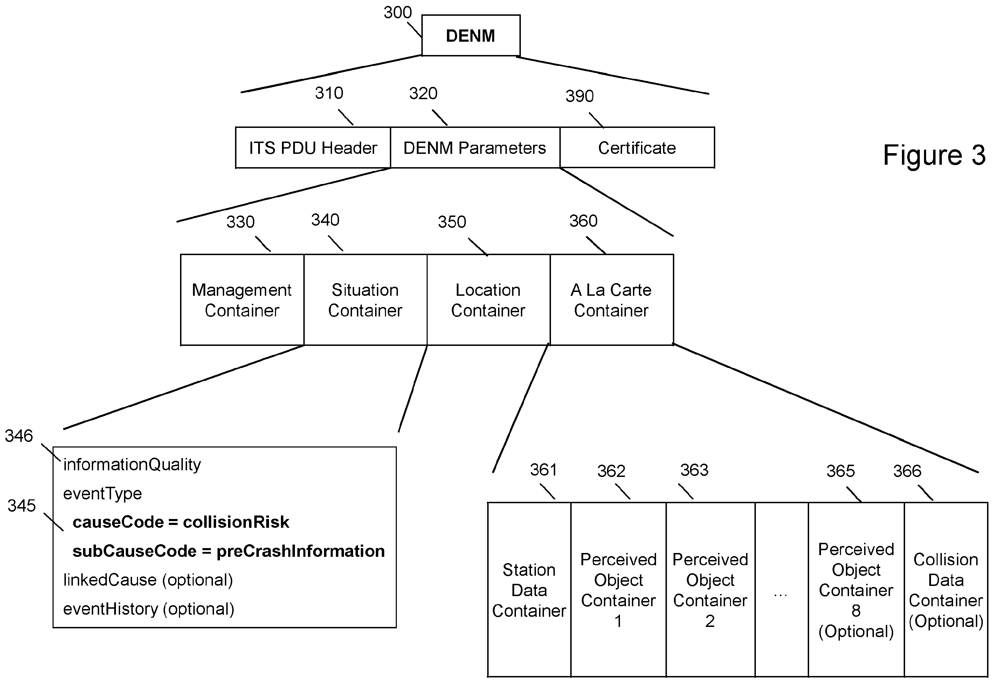

An exemplary format of a DENM according to embodiments of the invention is illustrated in **Figure 3****.** It is based on the DENM format used to report about a warning for an event, as specified in the version 1.3.1 of the ETSI EN 302 637-3 specification.

DENM 300 contains an ITS PDU header 310, a "DENM Parameters" field 320 and a optional Certificate 390.

ITS PDU header 310 includes information relating to the used protocol and information relating to the type of the message (in particular signalling the ITS message is of the DENM type). The header is defined in the above-mentioned specification.

"DENM Parameters" field 320 may contain a Management Container 330, a Situation Container 340, a Location Container 350 and a A La Carte Container 360.

Each container includes some data elements (DE) or data frames (DF). ETSI TS 102 894-2 Specification defines conventional data elements and data frames used in ITS messages.

Management Container 330 contains information regarding the event detected by situation analysis module 240 and comprises various fields including:
- eventPosition: this data frame indicates the geographical position of the detected event. In some embodiments, the eventPosition DF is set to the collision position 170 predicted by Situation Analysis module 240. In a variant, eventPosition is set to the reference position of one of the objects concerned by the event (e.g. a colliding object),
- actionld: this data frame contains the station ID of the originating ITS-S (here R-ITS-S 112) and a sequence number used to identify the action taken after an event is detected by such originating ITS-S, and
- stationType: this data element contains the type of the originating ITS-S, e.g. pedestrian(1), cyclist(2), moped(3), motorcycle(4), passengerCar(5), bus(6), lightTruck(7), heavyTruck(8), trailer(9), specialVehicles(10), tram(11), roadSideUnit(15), and so on as defined in ETSI TS 102 894-2 V1.3.1.

Optionally, Management Container 330 may comprise a linkedEvent DE which is set to the sequence number indicated in the actionlD of another DENM (because the sequence number of actionIDs is incremented) in case the originating ITS-S wishes to signal DENM 300 concerns the same event (here collision) as the previous DENM. Therefore, the DENM includes a link to a previous DENM. The receiving ITS-S can then process more rapidly the second warning message by tracking the analysis results the ITS-S might have done when it has received the first warning message.

In a use case, a receiving ITS-S can obtain (through the first DENM) an updated local map of a critical area when a collision risk is raised. The updated local map may for example identify VRUs (a pedestrian crossing the road, a bicycle in its dead angle). The receiving ITS-S then obtains the pre-crash warning DENM (second DENM) identifying it as a colliding vehicle. An emergency measure can be triggered taking into account the identified VRUs for example to avoid changing of lane (due to a bicycle is in the dead angle). In this example, the link between DENM is made for DENMs having the same causeCode (here 97).

Also, the link to a previous DENM may help ITS-Ss not involved in the (predicted) collision (e.g. a VRU) to determine quickly and in a simple way that they are in the vicinity of the expected collision. They can also take appropriate measures.

Below is a table providing a detailed description of Management Container 330 according to some embodiments:

**Table 1: exemplary format of Management Container 330**

| **Data Field** | **Description** |
|---|---|
| **actionID** | Identifier of a DENM containing the stationlD of the originating ITS-S and a sequence number uniquely identifying the event detected by the originating ITS-S. To be set according to TS 102 894-2. |
| **linkedEvent** | The sequence number (retrieved from previous actionlD) of the event to link - both DENM warnings are triggered by the same C-ITS station. This DE is optional. |
| **detectionTime** | Timestamplts-Timestamp at which the event is detected by the originating ITS-S. To be set according to TS 102 894-2. |
| **referenceTime** | Timestamplts-Timestamp at which a new, update or cancellation DENM is generated. To be set according to TS 102 894-2. |
| **termination** | Not set in case of new or update DENM. Set to isCancellation (0) in case of a cancellation DENM. |
| **eventPosition** | Geographical position of the predicted collision point (ReferencePosition). To be set according to TS 102 894-2. |
| **relevanceDistance** | Area where the DENM warning is considered as relevant. It is determined by the disseminating ITS-S depending on the situation. |
| | Typically: lessThan50m(0), lessThan100m(1) or lessThan200m(2) |
| **relevanceTrafficDirec tion** | allTrafficDirections(0) |
| **validityDuration** | 2 s - Note: Value is larger than TTC. |
| **stationType** | The type of the originating ITS-S, e.g. a Road Side Unit C-ITS station or a vehicle C-ITS station. To be set according to TS 102 894-2. |

Timestamplts is a reference time from which all timestamps are calculated.

Situation Container 340 contains information describing the warning event. In particular, it includes an eventType DF 345 that provides a description of the event type being detected and an informationQuality DE 346 that provides a probability of the detected event being truly existent at the event position.

eventType 345 is composed of two DEs, namely the causeCode and subCauseCode. As defined in EN 302 637-3 v1.3.1, various codes exist for the causeCode DE. For example, value 2 for the causeCode warns an "accident" event, while value 97 warns a "collision risk".

subCauseCode provides additional details on the cause of the event. For example, when causeCode=97, subCauseCode is set to 1 for a longitudinal collision risk, to 2 for a crossing collision risk, to 3 for a lateral collision risk, to 4 for a collision risk involving vulnerable road user and may be set to 5 (or any other value) for an imminent collision (e.g. TTC less than 1.5 s), i.e. a pre-crash situation.

The DENM of the invention is particularly advantageous to warn of a pre-crash situation (as specified in subCauseCode when causeCode is 97) because it provides within a single message information on each colliding objects.

informationQuality 346 may be set to a higher level of quality should the sensors used be of higher quality and/or be set to a higher level of quality should the objects for the event be detected by a higher number of sensors (i.e. data fusion of higher quality). For example, if a lidar sensor type is providing more accurate position and speed data than camera sensor type.

Below is a table providing a detailed description of Situation Container 340 according to some embodiments:

**Table 2: exemplary format of Situation Container 340**

| **Data Field** | **Description** |
|---|---|
| **informationQuality** | If the originating station is a vehicle-C-ITS station type: |
| | 0 (unknown), 1 (originating station is not directly involved in the collision, i.e. observer), 2 (conditions a) and d) and e) are fulfilled), 3 (conditions b) and d) and e) are fulfilled), 4 (conditions c) and d) and e) are fulfilled) |
| | Conditions: a) An object that likely is a vehicle and is located ahead of the host vehicle based on the vehicles's estimated paths and dimensions. |
| | b) Detected object is critical because it is triggering the FCW system. |
| | c) Detected object is critical because it is triggering the AEB system. |
| | d) TTC with the identified object is smaller than 1.5 s |
| | e) Relative speed between the identified object and the host vehicle is smaller than -10 km/h |
| | |
| | If the originating station is a road side unit station type: |
| | 0 (unknown), 1 (low sensor information quality), 2 (medium sensor information quality), 3 (high sensor information sensor quality) |
| **causeCode** | As defined in EN 302 637-3, e.g. collisionRisk (97) or Accident (2) |
| **subCauseCode** | As defined in EN 302 637-3 or preCrashlnformation (5) |

Location Container 350 contains additional information about the event location. In particular, as defined in EN 302 637-3, it includes traces DF and may include eventSpeed DF, eventPositionHeading DF and roadType DE. In some embodiments, eventSpeed DF and eventPositionHeading DF are not set (optional).

traces DF is for example set to the predicted trajectories up to the collision point 170 (e.g. 171, 172 in the scenario of **Figure 1****),** i.e. one or more lists of well-ordered waypoints that form an itinerary approaching toward the event position. Preferably, only the predicted trajectories of the colliding objects are provided in traces DF, possibly multiple trajectories for one and the same object. In variants, predicted trajectories may be provided (if any) for each object described in the DENM (through the Perceived Object Containers 362-365 of the A La Carte Container 360 as described below). Preferably, each trace (predicted trajectory) is associated with the objectID identifying an object in the Perceived Object Containers 362-365.

Below is a table providing a detailed description of Location Container 350 according to some embodiments:

**Table 3: exemplary format of Location Container 350**

| **Data Field** | **Description** |
|---|---|
| **eventSpeed** | (Optional) - not set |
| **eventPositionHeading** | (Optional) - not set |
| **traces** | Includes extrapolated trajectories of the objects (possibly colliding ones) up to the collision point |

A La Carte Container 360 contains additional information that is not provided by the other containers. In embodiments of the invention, A La Carte Container 360 includes a description of the originating ITS-S and, in addition, two or more containers describing the two or more objects involved in the collision, respectively. Container 360 may be renamed as PreCrash Container or the like in case of a PreCrash event (causeCode set to 97 and subCauseCode set to preCrashInformation, e.g. 5), or be renamed as Collision Information Container or the like in case of a Collision Risk event (causeCode set to 97 and subCauseCode set different from preCrashInformation, e.g. 0 to 4), or be renamed as Accidentlnformation Container or the like in case of an Accident event (causeCode set to 2).

Regardless of the event, Container 360 contains several containers:
- Station Data Container 361 containing information about the originating ITS-S (RSU 110 in the scenario of **Figure 1****),** in particular its coordinate system. Another name than "Station Data Container" may be used alternatively;
- Perceived Object Containers 362, 363, 365 containing the description of multiple objects with information relative to the originating ITS-S; and
- an optional Collision Data Container 366 containing additional information about the collision. Another name than "Collision Data Container" may be used alternatively.

In embodiments, Station Data Container 361 describes the originating ITS-S and contains the following data:
- ReferencePosition DF: the geographical position of the originating ITS-S,
- OriginatingVehicleContainer, if the originating ITS-S is a vehicle type. This Data Element contains the speed, heading and vehicleOrientationAngle (absolute orientation) of originating ITS-S vehicle (V-ITS-S). Hence, Station Data Container 361 defines a reference frame in which the information provided in the Perceived Object Containers 362, 363, 365 are defined.
If the originating ITS-S is fixed (e.g. R-ITS-S), no OriginatingVehicleContainer is provided and a predefined reference frame is used (e.g. WGS84). Either the orientation of the reference frame in case of R-ITS-S is predefined (e.g. WGS84 North) or it is set in a dedicated referenceOrientationAngle DF in Station Data Container 361 or any other place in A La Carte Container 360. To avoid duplicating the DF, referenceOrientationAngle and vehicleOrientationAngle DFs can be one and the same DF, because they cannot be used at the same time.

Although embodiments above propose to specify the collision point in the evenPosition DF of Management Container 330, other embodiments may contemplate using the evenPosition DF to indicate the geographical position of the originating ITS-S. This lightens Station Data Container 361 to a null container in case the originating ITS-S is a RSU (or with only the referenceOrientationAngle DF) or to the mere OriginatingVehicleContainer if the originating ITS-S is a vehicle type. As mentioned below, in this alternative embodiment, the geographical position of the predicted collision point may be set in Collision Data Container 366 using collisionPoint DF.

The originating ITS-S being the "observer" of the collision situation (although it may be involved therein), Container 361 can also be renamed Observer Container or Observer Data Container.

Below is a table providing a detailed description of Station Data Container 361 according to some embodiments:

**Table 4: exemplary format of Station Data Container 361**

| **Data Element and Data Field** | **Description** |
|---|---|
| StationData::**referencePosition** | ReferencePosition. To be set according to TS 102 894-2. |
| Station Data**::referenceOrientationAngle** | only if R-ITS-S. Set the orientation of the reference frame (e.g. WGS84 North) |
| StationData::**OriginatingVehicleContainer** | only if V-ITS-S |
| OriginatingVehicle::**heading** | Heading of the originating ITS-S. To be set according to TS 102 894-2. |
| OriginatingVehicle::**speed** | Speed of the originating ITS-S. To be set according to TS 102 894-2. |
| OriginatingVehicle::**vehicleOrientationAngle** | Absolute orientation of the originating ITS-S body in the world coordinate system. To be set according to TR 103 562. |

In some embodiments, the DENM includes an indication of a collision point and includes a container for each object perceived in an area surrounding the collision point. The collision point is specified for example in the evenPosition DF in the Management Container 330. The surrounding area may be disk defined by a radius (either predefined and known by the ITS-Ss or specified in the DENM Parameters 320, e.g. collisionlmpactDistance DF as specified below). In that case, the plural containers 362, 363, 365 correspond to plural objects in the area as perceived by the originating ITS-S. Providing such plural containers (which may be renamed "Collision Object Containers" or "Colliding Object Containers") may be useful when the DENM only warns a collision risk as the receiving ITS-Ss thus obtain information on each objects in the critical area, including the presumed colliding objects but also additional objects in their vicinities.

In alternative embodiments, for example directed to DENMs warning PreCrash events or Accident events but not only, the DENM includes containers only for objects involved in the collision. This configuration helps the receiving ITS-Ss to quickly determine whether or not they are involved in the imminent collision. There may be more than two objects and thus more than two containers 362, 363, 365, for instance when a massive accident (with several actors, incl. vehicles, VRU, trees, ...) is predicted. The containers may be renamed "Pre-Crash Object Containers" or "Accident Object Containers".

The number of Perceived Object Containers 362, 363, 365 (whatever its renaming) depends on the number of objects in the critical area or concerned by the same collision or pre-crash. As an example, a maximum number N of objects that can be described in DENM 300 is set to N=8 to avoid having too large DENM 300. Typical use cases for a Pre-Crash situation will usually have 2 objects and, in some exceptions, 3 objects. Should the number of objects to be described in the critical area be higher than this maximum number N, the N objects the closest to the collision point may be preferably defined through the Perceived Object Containers.

The number of provided Perceived Object Containers is signaled in DENM 300.

Advantageously, the Perceived Object Containers follow the same format as the same containers in the CPMs. This means that the same formatting routine can be used by Situation Analysis module 240 and that such information can be easily retrieved from environment model 220.

Therefore, the Perceived Object Containers 362, 363, 365 can be the same or similar to the corresponding containers in the CPMs as defined above, and include:
- objectID: an identifier of the detected object allowing a tracking of this object to be made,
- timeOfMeasurement: a time when the (last) measurement was made,
- Distance relative to the originating ITS-S (xDistance, yDistance and optionally zDistance, which are therefore the coordinates of the described object expressed in the local coordinate/reference frame fixed to the originating ITS-S),
- Speed relative to the originating ITS-S (xSpeed, ySpeed and optionally zSpeed), and
- optional information items that may include all or part of SensorlD, stationID (with a confidence level), objectRefPoint, yawAngle, Acceleration, dynamicStatus, planarObjectDimension, impactSection (which part of the object is subject to the collision), Classification. For example, providing the Classification of the object (i.e. the object type) can help the ITS-S receiving DENM 300 to analyze the situation. For instance, VRUs could be included in a pre-crash or collision DENM warning, hence allowing the receiving ITS-S to take into account a VRU present in or near the collision area to escape from the collision by changing its driving direction.

Instead of providing relative distance, speed and acceleration, absolute distance, speed and acceleration can also be provided.

The provision of a stationlD in one Perceived Object Container has various advantages.

Firstly, in case the originating ITS-S is involved in the detected collision or is present in the critical area, stationID in one of the Perceived Object Containers can be set to the station identifier of the originating ITS-S making it possible to reduce or omit other fields in the Perceived Object Container if they are known otherwise (i.e. from Station Data Container 361). The receiving ITS-S are able to make the link between such Perceived Object Container and the originating ITS-S because the stationlD identifier of the latter is included in the actionID DF of Management Container 330.

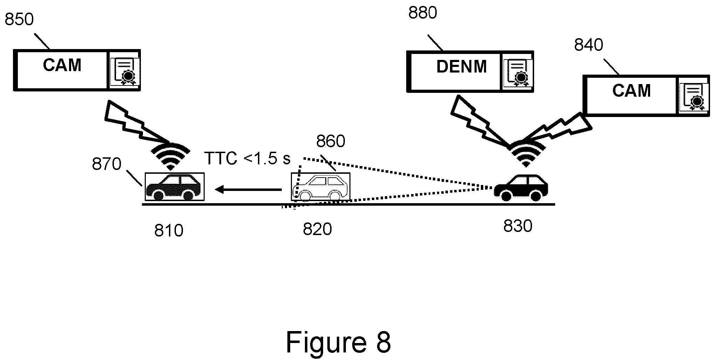

Secondly, in case a CAM 132 (that specifies a station ID) has been transmitted by one of the objects described by the Perceived Object Containers, it may be worth reusing the station ID specified in the CAM within the corresponding Perceived Object Container. Information similar to those of the CAM (e.g. relative distances and speeds) can then be omitted. Such scenario is for example illustrated below with reference to **Figure 8****.** The object corresponding to said station ID will immediately detects from the DENM that it is involved in the predicted collision.

Preferably, a level of confidence is provided in association with stationlD in order to reflect how confident is the originating ITS-S in the identification of the object. The confidence level is for example determined by sensor data fusion module 230 depending on the sensors used (number and types) and the fact that the stationID information is obtained through a received CAM or not.

Optionally, A La Carte Container 360 may comprise a linkedEvent DE which is set to the sequence number of an actionlD DF of another DENM (because the sequence numbers are incremented for new DENM events) in case the originating ITS-S wishes to signal DENM 300 concerns the same event (here collision) as the previous DENM. This embodiment has already been described above. linkedEvent DE in A La Carte Container 360 is an alternative to linkedEvent DE in Management Container 330.

Although embodiments above propose to include the predicted paths of the objects (incl. the colliding objects) in the traces DF of Location Container 350, other embodiments may contemplate keeping the original use of the traces DF for backward compatibility: traces DF stores an history (and not prediction) of the originating ITS-S's trajectory. In these alternative embodiments, the predicted paths may be specified in their respective Perceived Object Containers 362, 363, 365 (given the object concerned) using a new DF collisionPaths. The indication provided above for traces DF in Location Container 350 may still apply (e.g. multiple trajectories, trajectories for colliding objects only).

Below is a table providing a detailed description of a listing of Perceived Object Containers 362, 363, 365 according to some embodiments:

**Table 5: exemplary format of a listing of Perceived Object Containers**

| **Data Element and Data Field** | **Description** |
|---|---|
| **numberOfPerceivedObjects** | Number of objects. To be set according to TR 103 562. |
| **linkedEvent** | Sequence number indicated in the actionlD of the event to link - both DENM warnings are triggered by the same C-ITS station. This DE is optional. |
| **perceivedObjects** | Two or more objects concerned by the predicted collision / pre-crash with customized data field of PerceivedObject of a CPM as described in TR 103 562. This DF contains all the relative information (including relative distance and speed) of the perceived objects from the referencePosition using R-ITS-S coordinate system if the originating ITS-S is a roadside unit, or from the referencePosition and the OriginatingVehicleContainer using the V-ITS-S coordinate system if the originating ITS-S is a vehicle type. |
| PerceivedObject::**objectID** | A constant identifier of the object. To be set according to TR 103 562. |
| PerceivedObject::**timeOfMeasurement** | Relative time, describing the moment in time when the provided measurement data was generated by the on-board sensor. The relative value shall be provided in relation to the DE detectionTime. |
| Perceived Object::**xDistance** | X-component of the relative distance between the object reference point and the ITS reference position. To be set according to TR 103 562. |
| PerceivedObject::**yDistance** | Y-component of the relative distance between the object reference point and the reference position. To be set according to TR 103 562. |
| Perceived Object: :**xSpeed** | X-component of the relative speed between the object reference point and the ITS reference position. To be set according to TR 103 562. |
| PerceivedObject::**ySpeed** | Y-component of the relative speed of the object reference point from the ITS and the ITS reference position. To be set according to TR 103 562. |
| PerceivedObject::**yawAngle** | Relative yaw angle of object from the ITS-S's reference point. To be set according to TR 103 562. This data element is optional. |
| PerceivedObject::**planarObjectDimension1** | First dimension of object as provided by the sensor or environment model. This dimension is always contained in the plane which is perpendicular to the direction of the angle indicated by the yawAngle and which contains the object reference point. To be set according to TR 103 562. |
| | Note: This width might be shorter or longer than the real object width due to sensor vision limitations (e.g. obstructions). |
| Perceived Object::**StationId** | The stationlD of the object for which the values are provided. To be set according to TS 102 894-2. |
| | This data element is optional. |
| | Note: The stationlD of the object may change during the use case, when the object changes its AT. |
| PerceivedObject::**StationIdConfidenceLev el** | The confidence level of the association of the stationlD of the object for which the values are provided. This data element is optional. |
| Perceived Object::**impactSection** | Indication of the object's section where the impact will most likely occur. When the target object is likely to be a vehicle, then this data element is made available, otherwise (every other type of object) the data element is not provided. |
| | Note: It is possible to derive the required object dimensions and orientation from models to provide a best guess. |
| Perceived Object::**Classification** | Provides the classification of the described object. Multi-dimensional classification may be provided along with confidence levels. |
| PerceivedObject::**collisionPaths** | Includes one or more extrapolated (predicted) trajectories for the object (possibly colliding one) up to the collision point |
| | This data frame is optional. |

Turning now to the optional Collision Data Container 366, it is used to convey additional information the originating ITS-S can obtain when analyzing the road intersection and the current collision-related situation, for example the predicted time to collision, TTC.

As an example of additional analysis, the originating ITS-S monitoring the critical area may detect that one of the colliding vehicles was in excessive speed or has violated a stop sign or traffic light. In a variant, it can detect that an animal was present on the road and forced a colliding vehicle to start an emergency maneuver leading to the collision.

Situation analysis module 240 may hence indicate some collision cause information in this respect (using e.g. collisionCause DF).

Although embodiments above propose to include the predicted paths of the objects (incl. the colliding objects) in the traces DF of Location Container 350, other embodiments may contemplate keeping the original use of the traces DF for backward compatibility: traces DF stores an history (and not prediction) of the originating ITS-S's trajectory. In these alternative embodiments, the predicted paths may be specified in Collision Data Container 366 using a new DF collisionPaths. The indication provided above for traces DF in Location Container 350 may still apply (e.g. multiple trajectories, objectID to associate each trace with an object, trajectories for colliding objects only).

Similarly, although embodiments above propose to specify the collision point in the evenPosition DF of Management Container 330, alternative embodiments above provide setting the geographical position of the originating ITS-S in the eventPosition DF. It is thus contemplated providing new collisionPoint DF in Collision Data Container 366 to specify the geographical position of the collision point.

Optionally, another data frame collisionlmpactDistance is added to indicate an area of the collision around the collisionPoint to integrate the imprecision of the collision prediction and possible change of trajectories. Such area may also be used directly (e.g. as it is) or indirectly (e.g. by doubling or tripling the area radius) to define the critical area defining which objects are described in DENM 300. collisionlmpactDistance defines for example a radius (e.g. 20 m) to apply around the collision point.

Optionally, Collision Data Container 366 may comprise a linkedEvent DE which is set to the sequence number indicated in an actionlD of another DENM (because the sequence number in actionlD is incremented at each new DENM event) in case the originating ITS-S wishes to signal DENM 300 concerns the same collision event as the previous DENM. This embodiment has already been described above. linkedEvent DE in Management Container 330 or directly in A La Carte Container 360 is an alternative to linkedEvent DE in Collision Data Container 366.

Below is a table providing a detailed description of Collision Data Container 366 according to some embodiments:

**Table 6: exemplary format of Collision Data Container 366**

| **Data Element and Data Field** | **Description** |
|---|---|
| Collision Data::**timeToCollision** | Predicted time to collision determined by the originating ITS-S. |
| CollisionData::**collisionCause** | Observations of originating ITS-S about the cause of the collision (e.g. traffic light violation, emergency vehicle, VRU on the road, slippery road, traffic jam, cascade collision ...). This DF is optional. |
| CollisionData::**collisionPoint** | Geographical position of the predicted collision point (ReferencePosition). To be set according to TS 102 894-2. This DF is optional. |
| CollisionData::**collisionImpactDistance** | Area of the collision around the collision point. This DF is optional. |
| CollisionData::**collisionPaths** | Includes one or more extrapolated (predicted) trajectories for the object (possibly colliding one) up to the collision point |
| | This data frame is optional. |
| CollisionData::**linkedEvent** | Sequence number indicated in the actionlD of the event to link - both DENM warnings are triggered by the same C-ITS station. |
| | This DE is optional. |

Back to **Figure 3****,** Certificate 390 is attached to DENM 300 to certify the authenticity of the originating ITS-S (RSU 110 in the scenario of **Figure 1****)** and its permissions to provide ITS messages and some information they comprise. The permissions are defined in a so-called Service Specific Permission (SSP) item within the certificate.

In the described ITS, in order to secure V2X communications within ITS 100, a Public-Key-Infrastructure (PKI) as defined in the version 1.1.1 of the ETSI TS 102 731 specification may be used that provides security and verification required to trust the originating ITS-S. The PKI-based security may be implemented through the use of certificates delivered by a certification authority to the ITS stations.

Therefore, each ITS message exchanged is made of a non-encrypted message, DENM parameters 320, accompanied with a digital signature and a pseudonym certificate (also referred to as authorization ticket) that validates the authenticity of the originating ITS-S and the integrity of the message, while keeping anonymity of the originating ITS-S. For communicating within the ITS, a ITS-S may comprise one or more authorization tickets, and may use an authorization ticket for communicating.

Indeed, as the road management is critical from a safety point of view, only entities certified by the certification authority should contribute to such management, or at least should be given high confidence. For example, information about a pre-crash warning and an identification of the concerned (colliding) objects present in the monitored critical zone, provided in PreCrash Container 360 of DENM 300, should preferably, for security reasons, come from an ITS-S considered as secure.

The authorization ticket may therefore comprise indications relating to the privileges and authorizations of an originating ITS-S to transmit specific ITS messages, notably DENM 300 comprising a causeCode set to collisionRisk (or Accident) with a subCauseCode set to preCrashInformation in DF 345.

To do this, for example, an authorization ticket may contain a field called ITS AID, which includes the list of the services that the originating ITS-S station is authorized to access and use as specified in ETSI TR 102 965. In particular, a specific one is dedicated to DEN Service that indicates that the originating ITS-S is entitled to send DENMs. The authorization ticket contains also a field called ITS AID Service Specific Permissions (SSP), which indicates specific sets of permissions within the overall permissions indicated by the ITS AID field. The format of the SSP is specified in ETSI TS 103 097.

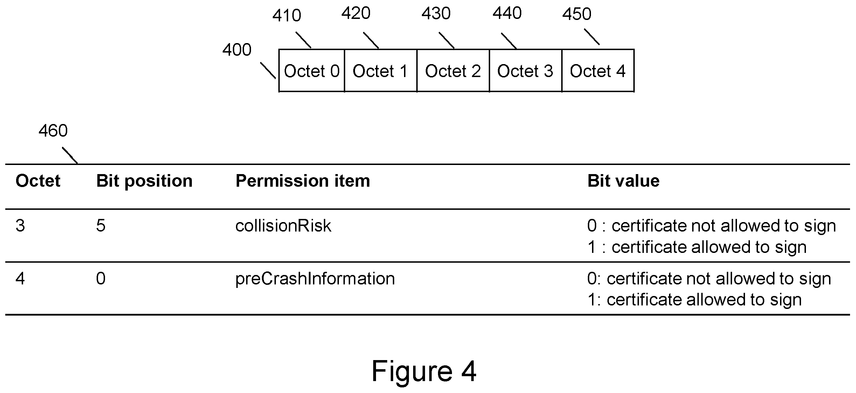

In some embodiments, a SSP is provided in the certificate of a DENM 300 containing a causeCode set to collisionRisk (value 97) with a subCauseCode set to preCrashInformation (e.g. value 5) as described above. **Figure 4** schematically illustrates an exemplary SSP 400.

SSP 400 is made of five octets, 410, 420, 430, 440 and 450. The first one 410 identifies the SSP version and the following ones 420, 430, 440 specify specific permissions and the last one 450 is reserved for future usage (compare to DENM Release 1, defined in EN 302 637-3).

Each bit in octets 420, 430, 440 defines a permission.

For example, bit B5 (i.e. with position 5) in the fourth octet 440 may define the permission to emit a DENM warning with a causeCode set to collisionRisk (if B5=1) or not (B5=0).

Similarly, bit B0 (i.e. with position 0) in the fifth octet 450 may define the permission to emit a DENM warning with a subCauseCode set to preCrashInformation and including a PreCrash Container 360 (if B0=1) or not (B0=0).

Of course, other bits available in the SSP can be used to define those permissions.

In some embodiments, SSP 400 is provided in authorization tickets dedicated for a RSU (or R-ITS-S) only as they are less likely to be hacked. However, more generally, SSP 400 is provided within authorization tickets for any type of ITS-S.

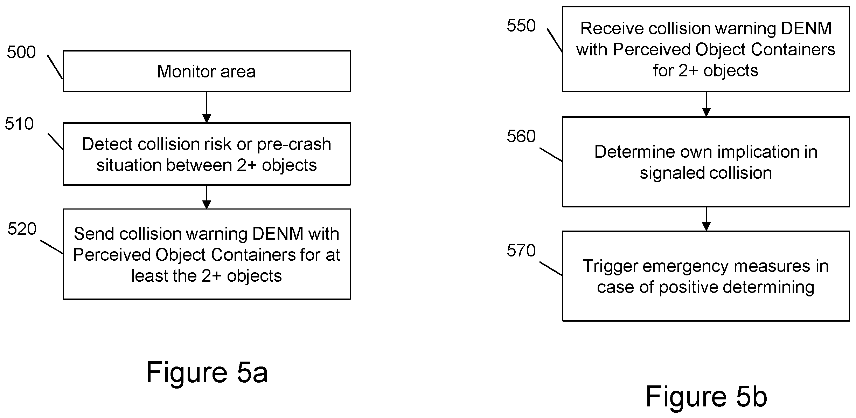

**Figures 5a** and **5b** illustrate, using flowcharts, general steps of methods according to the invention respectively at an originating ITS-S sending a collision warning DENM and at a corresponding receiving ITS-S.

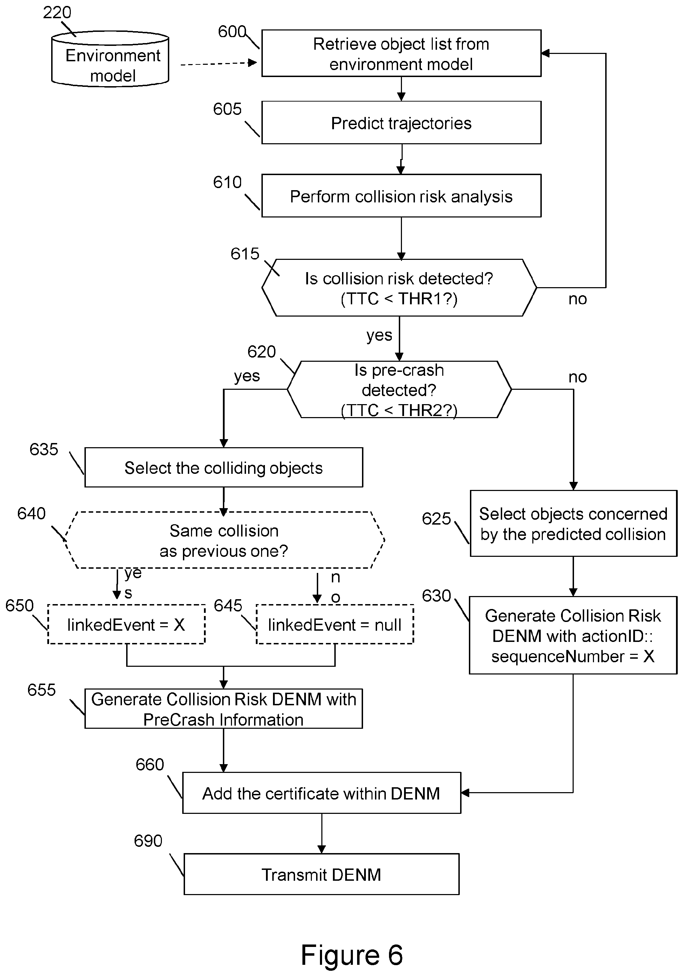

**Figures 6** illustrates, using a flowchart, more detailed steps of the method at the originating ITS-S according to embodiments of the invention.

As shown in **Figure 5a****,** a method of communication in an ITS first comprises, at the originating ITS-S, e.g. RSU 110 of **Figure 1****,** monitoring at step 500 an area such as a road portion or a road intersection as shown in **Figure 1****.** To that end, the originating ITS-S uses its sensors 120-123, 210 and its Sensor Data Fusion module 230 to update its Environment Model 220 with perceived objects.

Situation Analysis Module 240 continuously analyses the objects of the Environment Model 220. It detects at step 510 whether a collision-related event is occurring or is about to occur between two or more objects. This may include predicting trajectories for the perceived objects and inferring whether a risk of collision exists between some objects, or even whether a pre-crash situation exists if the predicted time to collision is less than 1.5 s.

In case a collision-related event is detected, the originating ITS-S sends at step 520 a DENM warning the event, said DENM including a description of the originating ITS-S and, in addition, at least two containers describing the two or more objects, respectively.

The DENM may warn an accident (causeCode = Accident) and the sole collided objects are described using Perceived Object Containers.

The DENM may warn a collision risk (causeCode = collisionRisk) and all or a maximum number of objects around the predicted collision point are described using Perceived Object Containers. These objects include those predicted to collide.

The DENM may warn a pre-crash situation (causeCode = collisionRisk and subCauseCode = preCrashInformation) and the sole colliding objects are described using Perceived Object Containers.

As shown in **Figure 5b****,** such collision-related DENM is received at step 550 by a receiving ITS-S of ITS 100, usually a vehicle. The received DENM may be used to update its local dynamic map in the signaled critical area.

The receiving ITS-S also uses the DENM at step 560 to determine whether it is concerned by the collision, either directly (colliding object) or indirectly (in the vicinity of the colliding objects). In particular, the receiving ITS-S may determine whether it corresponds to one of the objects described in the received DENM, to know whether it is a colliding object or close to a colliding object.

This may be done by checking whether the description of an object (as defined in the Perceived Object Containers) matches its own description (e.g. in terms of position, speed, dimensions, stationID, etc.) to determine it is a colliding object.

In a variant, this may be done by checking whether one of the colliding objects (as defined in the Perceived Object Containers) is too close (in terms of position, speed and dimensions) to itself, to determine an own risk of collision with the colliding object.

In case of positive determining, the receiving ITS-S can then trigger at step 570 collision-related measures with a view of preparing the vehicle for the collision (e.g. closing the windows, tensioning the set-belts, switching on the warning lights), or of saving itself from colliding (e.g. changing of road line, emergency braking) or of reducing risks that a colliding object in its vicinity interferes with it (e.g. braking, changing of road line, switching on the warning lights).

**Figure 6** shows an embodiment of the method at the originating ITS-S. It is assumed the originating ITS-S performs a monitoring of an area through sensors and/or receives CAMs and CPMs, based on which it builds and updates its Environment Model 220.

Situation analysis module 240 retrieves a list of objects from Environment Model 220 at step 600. The objects concerned may be those located in the monitored area during the last N minutes (e.g. 5 or 15 minutes).

At step 605, situation analysis module 240 performs a prediction of the trajectories of those objects. Any known trajectory predicting method can be used. It turns out that module 240 obtains one or more predicted trajectories for moving objects. A predicted trajectory is made of a set of predicted positions, each associated with a position time.

To ease the following process, fixed objects may be assigned a "predicted trajectory" corresponding to its fixed position whatever the time.

Based on the predicted trajectories of the objects, situation analysis module 240 performs a collision risk analysis at step 610.

A collision may be detected between two objects when their predicted trajectories have simultaneous and collocated predicted positions. "collocated" means that the two positions from the two trajectories are the same or close enough (given a distance margin, e.g. 1 m) and "simultaneous" means that the two associated position times are the same or close enough (given a time margin, e.g. 0.5 s). A collision may be detected between more than two objects, should these multiple objects having simultaneous and collocated predicted positions.

Risk of collision is detected at step 615 based on the predicted trajectories. Any situation of predicted collision may trigger such a risk. In a variant, only collisions predicted in a near future (e.g. before a first time threshold, e.g. 5 s) are labelled as a collision risk. Hence, time to collision TTC is compared to said first threshold THR1.

In case no risk is detected, the process loops back to step 600 to continue with the analysis of the perceived objects.

In case a risk is detected, it is assessed whether it is a pre-crash situation or not at step 620. A pre-crash situation defines an imminent collision, i.e. a collision predicted to happen before a second time threshold, typically within the next 1.5 s. Hence, time to collision TTC is compared to said second threshold THR2.

In the negative (only a collision risk is detected), objects directly or indirectly concerned by the predicted collision are selected from the list of monitored objects at step 625.

In some embodiments which do not fall within the scope of the invention, only the objects involved in the predicted collision (i.e. colliding objects) are selected.

In other embodiments, all objects surrounding the predicted collision point, given a collision margin are selected. In a variant, only N of these objects are selected if a maximum number N of objects can be described in a DENM using Perceived Object Containers. In that case, the N objects the closest to the collision point are selected, including the colliding objects.

Situation analysis module 240 next generates DENM Parameters 320 of a Collision Risk DENM 300, at step 630.

In some embodiments, a conventional (in the meaning of EN 302 637-3) Collision Risk DENM can be built, including causeCode in Situation Container 340 set to collisionRisk (value 97).

In other embodiments, DENM Parameters 320 can be built that comprise Perceived Object Containers for the objects selected at step 625

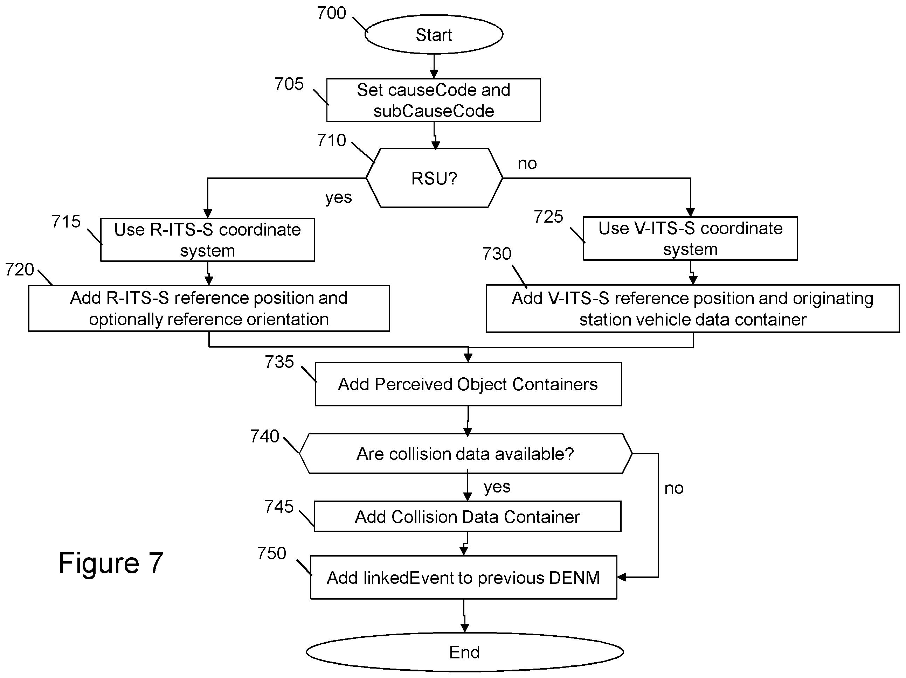

The description above of **Figure 3** provides details on which information is provided in the various containers, in particular the sequence number in the actionlD DF in Management Container 330 is set to a new value (e.g. X) and causeCode in Situation Container 340 is set to collisionRisk (value 97) while subCauseCode is different from preCrashInformation. **Figure 7** described below provides additional details on how building the various containers 330, 340, 350, 360 of DENM Parameters 320 according to embodiments of the invention.

As recalled above, A La Carte Container 360 contains two or more Perceived Object Containers 362, 363, 365, each describing one of the objects selected at step 625.

On the other hand, if a pre-crash situation is detected at step 620, the objects involved in the predicted collision (i.e. colliding objects) are selected from the list of monitored objects, at step 635.

Optional step 640 determines whether the detected pre-crash situation (or imminent collision) concerns the same collision as a collision risk previously notified through a DENM. For example, Situation analysis module 240 may determine whether the colliding objects selected at step 635 was selected (at step 625) for a previously sent Collision Risk DENM. In embodiments, only the last Collision Risk DENM is considered. In other embodiments, the M last collision-related DENMs or all the sent collision-related DENMs within a time window are considered.

In the negative of step 640, a new collision is detected and a linkedEvent parameter (used to fill in the linkedEvent DE described above) is set to null at optional step 645.

In the affirmative of step 640, the pre-crash situation concerns a previously detected collision, let say collision signaled with actionlD=X. In that case, linkedEvent parameter (used to fill in the linkedEvent DE described above) is set to X at optional step 650.

After step 645 or 650, Situation analysis module 240 next generates DENM Parameters 320 of a Collision Risk DENM 300, at step 655. DENM Parameters 320 can be built that comprise Perceived Object Containers for the colliding objects selected at step 635

The description above of **Figure 3** provides details on which information is provided in the various containers, in particular causeCode in Situation Container 340 is set to collisionRisk (value 97) and subCauseCode is set to preCrashInformation. **Figure 7** described below provides additional details on how building the various containers 330, 340, 350, 360 of DENM Parameters 320 according to embodiments of the invention.

As recalled above, A La Carte Container 360 contains two or more Perceived Object Containers 362, 363, 365, each describing one of the objects selected at step 625.

If the linkedEvent parameter is implemented to provide a link to a previous collision-related DENM, linkedEvent DE in DENM Parameters 320 is set to linkedEvent parameter as determined at step 645 or 650.

Once the Collision Risk or Pre-Crash warning DENM 300 is ready (after step 630 or 655), the ITS certificate 390 as described above with reference to **Figure 4** is attached to DENM 300 at step 660. Of course, the originating ITS-S checks (either at step 660 or at the beginning of the process) that it is authorized to provide the information set in DENM 300. For example, this may be done by checking that bit B5 in octet 440 and bit B0 in octet 450 are both enabled in case a collision risk DENM with subCauseCode set to preCrashInformation (i.e. a pre-crash warning DENM) is intended to be sent.

Next, DENM 300 is transmitted at step 690 by the originating ITS-S, i.e. R-ITS-S module 112 of RSU 110 in the scenario of **Figure 1****.**

In this illustrative process, a link to a previous DENM is made between a pre-crash warning DENM (next DENM) and a collision risk DENM (previous DENM). It is to be noted that the use of a link to a previous DENM is not limited to this combination of DENMs. For instance, it may be done between collision risk DENMs or between pre-crash warning DENMs or between an Accident warning DENM and a collision risk or pre-crash warning DENM. More generally, a link may be defined between any DENM and a previous DENM comprising multiple Perceived Object Containers in A La Carte Container 360 describing multiple perceived objects.

**Figure 7** illustrates, using a flowchart, detailed steps to generate the various containers 330, 340, 350, 360 of DENM Parameters 320 according to embodiments of the invention. Conventional fields in these containers are built in a conventional way and thus not described with more details.

The container building starts at step 700.

The nature of the warning as determined through steps 510 or 615+620 is specified in Situation Container 340 together with the informationQuality DE. causeCode is set to collisionRisk or Accident depending on the event detected. In case of collisionRisk, subCauseCode may be set to preCrashInformation if TTC<1.5 s. This is step 705.

Next it is determined at step 710 whether the originating ITS-S is a RSU (R-ITS-S) or a vehicle (V-ITS-S). This is because a different coordinate system is used and can be defined in StationData Container 361 in some embodiments.

In case of R-ITS-S, the R-ITS-S coordinate system as defined in CPM TR 103 562 is to be used (step 715). Hence, StationData::referencePosition and optional StationData::referenceOrientationAngle are set to the position of R-ITS-S and to a reference orientation (e.g. WGS84 North) respectively. This is step 720.

In case of V-ITS-S, the V-ITS-S coordinate system as defined in CPM TR 103 562 is to be used (step 725). Hence, StationData::referencePosition and OriginatingVehicle Container are set. referencePosition is set to the position of V-ITS-S, while OriginatingVehicle::heading, OriginatingVehicle::speed, OriginatingVehicle::vehicleOrientationAngle (or alternatively StationData::referenceOrientationAngle) are respectively set to the heading orientation, the speed and the vehicle orientation of V-ITS-S. This is step 730.

Next to steps 720 and 730, step 735 consists for the originating ITS-S to retrieve the Perceived Object Containers for all the objects selected at step 625 or 635. Basically, the information for the containers is retrieved from Environment model 220. These Perceived Object Containers are defined in A La Carte Container 360.

The number of objects is first defined (numberOfPerceivedObjects), next each Perceived Object Container is added. The information about the object relative distance and speed from the reference position specified in the Station Data Container 361 is included. If available the information about the station ITS ID and the confidence level are also included in the Perceived Object Containers. All the information items that can be defined are described above.

Next at step 740, it is determined whether Situation Analysis Module 240 has data related to the collision. This may include a predicted collision point, a predicted time to collision, predicted trajectories for the objects, a collision distance, a collision cause.

In the affirmative, these data are included in corresponding DEs and DFs within Collision Data Container 366, at step 745. In some variants, the collision point is specified in the eventPosition DF of Management Container 330; the predicted trajectories are specified in the traces DF of Location Container 350 or in the PerceivedObject::collisionPaths DFs of the various Perceived Object Containers. Next, the process goes to step 750.

In the negative, the process goes directly to step 750.

At step 750, if a link to a previous DENM is required (as determined through optional steps 640-650), linkedEvent DE (in Management Container 330 or alternatively in A La Carte Container 360 or even in Collision Data Container 366) is set to the sequence number indicated in the actionlD of the previous DENM

**Figure 8** illustrates another scenario for an implementation of the present invention, where the originating ITS-S is a vehicle observing a pre-crash situation of two vehicles ahead, one of which having C-ITS communication while the other has not.

In the Figure, three vehicles are driving on the same lane. Vehicle 810 is an ITS-S emitting a CAM 850 describing itself (including its own stationlD). Vehicle 820 follows vehicle 810 and is not having C-ITS communication. Third vehicle 830 is another ITS-S emitting a CAM 840 and observing vehicles 810 and 820 ahead.

Vehicle 830 implements the invention as an originating ITS-S. It has sensors, a Sensor Data Fusion module 230, an Environment model 220 and a Situation Analysis Module 240, e.g. similar to the ones shown in **Figure 2****.**

Vehicle 810 may not be equipped with rear sensors (or the sensors may be malfunctioning) in such a way it is not able to detect collision risks or pre-crash situations with following vehicle 820.

Vehicle 830 detects object 860 representative of vehicle 820 using its on-board front sensors. Vehicle 830 is also aware of object 870 representative of vehicle 810 using the received CAM 850. These information items are used to update Environment model 220.

Situation Analysis Module 240 of vehicle 830 continuously analyses these information items and at a time, detects a collision risk or a pre-crash situation for objects 860 and 870.

In a similar process as those shown in **Figures 5a****,** **6** and **7****,** the ITS-S module of vehicle 830 generates a Collision Risk or pre-crash DENM warning 880 to alert C-ITS-equipped vehicle 810 of the situation.

In some embodiments which do not fall within the scope of the invention, instead of providing the entire Perceived Object Container for object 870 (C-ITS-equipped vehicle 810), a reference to stationID as specified in CAM 850 may be enough. Indeed, vehicle 810 will quickly recognize itself, while vehicle 820 will not receive and process such information (it is not equipped to receive DENM 880). In some embodiments, the Perceived Object Container for object 870 contains the following fields: objectID, timeOfMeasurement, stationID, optionally StationldConfidenceLevel (set to a high level of confidence), optionally Classification and optionally collisionPaths. In other words, the relative distances and speeds can be omitted because vehicle 820 is not an ITS-S (and vehicle 810 already knows them).

Hence, vehicle 830 prepares the information for the Perceived Object Containers as shown below:

| Perceived Object Containers | | | |
|---|---|---|---|
| | **Relative distances and speeds** | **StationId** | **StationIdConfidenceLevel** |
| ObjectId = 860 | Obtained from on-board sensors | Unknown | - |
| ObjectId = 870 | Computed from CAM data (or not set) | Obtained from CAM ITS ID (850) | 100 |

Based on received DENM 880, vehicle 810 is able to quickly identify the collision risk or the pre-crash situation, and then to take appropriate emergency measures as described above.

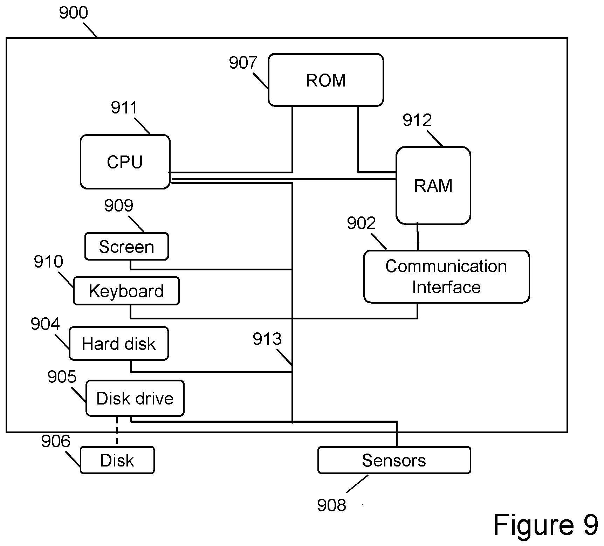

**Figure 9** shows a schematic representation an example of a communication ITS-S device configured to implement embodiments of the present invention. It may be either an ITS-S embedded in a vehicle or in a road side unit 120.

The communication device 900 may preferably be a device such as a micro-computer, a workstation or a light portable device embedded in the vehicle or RSU. The communication device 900 comprises a communication bus 913 to which there are preferably connected:
- a central processing unit 911, such as a microprocessor, denoted CPU or a GPU (for graphical processing unit);
- a read only memory 907, denoted ROM, for storing computer programs for implementing the invention;
- a random access memory 912, denoted RAM, for storing the executable code of methods according to embodiments of the invention as well as the registers adapted to record variables and parameters necessary for implementing methods according to embodiments of the invention; and
- at least one communication interface 902 connected to the radio V2X communication network over which ITS messages are transmitted. The ITS messages are written from a FIFO sending memory in RAM 912 to the network interface for transmission or are read from the network interface for reception and writing into a FIFO receiving memory in RAM 912 under the control of a software application running in the CPU 911.

Optionally, the communication device 900 may also include the following components:
- a data storage means 904 such as a hard disk, for storing computer programs for implementing methods according to one or more embodiments of the invention;
- a disk drive 905 for a disk 906, the disk drive being adapted to read data from the disk 906 or to write data onto said disk;
- a screen 909 for serving as a graphical interface with the user, by means of a keyboard 910 or any other pointing means.

The communication device 900 may be optionally connected to various peripherals including perception sensors 908, such as for example a digital camera, each being connected to an input/output card (not shown) so as to supply data to the communication device 900.

Preferably the communication bus provides communication and interoperability between the various elements included in the communication device 900 or connected to it. The representation of the bus is not limiting and in particular the central processing unit is operable to communicate instructions to any element of the communication device 900 directly or by means of another element of the communication device 900.

The disk 906 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the apparatus, possibly removable and adapted to store one or more programs whose execution enables a method according to the invention to be implemented.

The executable code may optionally be stored either in read-only memory 907, on the hard disk 904 or on a removable digital medium such as for example a disk 906 as described previously. According to an optional variant, the executable code of the programs can be received by means of the communication network, via the interface 902, in order to be stored in one of the storage means of the communication device 900, such as the hard disk 904, before being executed.

The central processing unit 911 is preferably adapted to control and direct the execution of the instructions or portions of software code of the program or programs according to the invention, which instructions are stored in one of the aforementioned storage means. On powering up, the program or programs that are stored in a non-volatile memory, for example on the hard disk 904 or in the read only memory 907, are transferred into the random access memory 912, which then contains the executable code of the program or programs, as well as registers for storing the variables and parameters necessary for implementing the invention.

In a preferred embodiment, the apparatus is a programmable apparatus which uses software to implement the invention. However, alternatively, the present invention may be implemented in hardware (for example, in the form of an Application Specific Integrated Circuit or ASIC).

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of communication in an Intelligent Transport System, ITS, comprising, at an originating ITS station, ITS-S (110):
responsive to detecting (510) a collision or risk of collision at a collision point between at least two objects (150, 151, 152), sending (520) a collision warning Decentralized Environmental Notification Message, DENM, (300)
wherein the DENM includes a description (361) of the originating ITS-S and, in addition, at least two containers (362, 363, 365) describing the at least two objects, respectively, and one or more containers for one or more objects that are perceived in a critical area surrounding the collision point and that are not directly involved in the collision.

2. A method of communication in an Intelligent Transport System, ITS, comprising, at a receiving ITS station, ITS-S (240, 241, 242):
receiving (550), from an originating ITS-S (110), a collision warning Decentralized Environmental Notification Message, DENM, (300) warning a collision or risk of collision at a collision point between at least two objects (150, 151, 152), wherein the DENM includes a description (361) of the originating ITS-S and, in addition, at least two containers (362, 363, 365) describing the at least two objects, respectively, and one or more containers for one or more objects that are perceived in a critical area surrounding the collision point and that are not directly involved in the collision,
determining (560) whether the receiving ITS-S corresponds to one of the at least two objects described in the received DENM, and
in case of positive determining, triggering (570) collision-related measures.

3. The method of Claim 1 or 2, wherein a causeCode field of the DENM is set to a Collision Risk or Accident value.

4. The method of Claim 3, wherein, in case the causeCode field of the DENM is set to a Collision Risk, a subCauseCode field of the DENM is set to a PreCrash value defining an imminent collision with a time to collision less than a threshold.

5. The method of Claim 1 or 2, wherein the originating ITS-S is a road-side unit (110).

6. The method of Claim 1 or 2, wherein at least one of the containers (362, 363, 365) is a PerceivedObjectContainer as defined in ETSI TR 103 562 V2.1.1.

7. The method of Claim 1 or 2, wherein one of the containers (362, 363, 365) includes a Station Identifier of the originating ITS-S.

8. The method of Claim 1 or 2, wherein one of the containers (362, 363, 365) includes a Station Identifier of an ITS-S separate from the originating ITS-S and obtained from a Cooperative Awareness Messages (132) previously received from the separate ITS-S.

9. The method of Claim 1 or 2, wherein one of the containers (362, 363, 365) includes a classification field providing a classification of the corresponding described object and/or one of the containers includes coordinates of the corresponding described object as expressed in a local coordinate frame fixed to the originating ITS-S.

10. The method of Claim 1 or 2, wherein the DENM (300) includes an indication of a collision point, and further includes a container for each object perceived in the critical area.

11. The method of Claim 1 or 2, wherein the DENM (300) further includes a Collision Data container (366) indicating one or more predicted trajectories of the objects and/or a cause of the collision.

12. The method of Claim 1 or 2, wherein the DENM (300) includes a link to a previous DENM.

13. 14. An Intelligent Transport System, ITS, station, ITS-S (110, 240, 241, 242) comprising at least one microprocessor configured for carrying out the method of any of claims 1-12.

14. A non-transitory computer-readable medium storing a program which, when executed by a microprocessor or computer system in an Intelligent Transport System, ITS, station, ITS-S, causes the ITS-S to perform the method of any of claims 1-12.

## Patentansprüche

1. Verfahren zur Kommunikation in einem intelligenten Verkehrssystem, ITS, das an einer sendenden ITS-Station, ITS-S, (110), umfasst:
als Reaktion auf ein Erfassen (510) einer Kollision oder eines Kollisionsrisikos an einem Kollisionspunkt zwischen wenigstens zwei Objekten (150, 151, 152), Senden (520) einer Kollisionswarnung in Form einer dezentralen Umgebungsbenachrichtigungsnachricht, DENM, (300),
wobei die DENM eine Beschreibung (361) der sendenden ITS-S beinhaltet und zusätzlich wenigstens zwei Container (362, 363, 365), die jeweils die wenigstens zwei Objekte beschreiben, und einen oder mehrere Container für ein oder mehrere Objekte, die in einem kritischen Bereich um den Kollisionspunkt herum wahrgenommen werden und die nicht direkt an der Kollision beteiligt sind.

2. Verfahren zur Kommunikation in einem intelligenten Verkehrssystem, ITS, das an einer empfangenden ITS-Station, ITS-S, (240, 241, 242), umfasst:
Empfangen (550) einer Kollisionswarnung in Form einer dezentralen Umweltbenachrichtigungsnachricht, DENM, (300) von einer sendenden ITS-S (110), die vor einer Kollision oder einem Kollisionsrisiko an einem Kollisionspunkt zwischen wenigstens zwei Objekten (150, 151, 152) warnt, wobei die DENM eine Beschreibung (361) der sendenden ITS-S beinhaltet und, zusätzlich wenigstens zwei Container (362, 363, 365), die jeweils die wenigstens zwei Objekte beschreiben, und einen oder mehrere Container für ein oder mehrere Objekte, die in einem kritischen Bereich um den Kollisionspunkt herum wahrgenommen werden und die nicht direkt an der Kollision beteiligt sind,
Bestimmen (560), ob die empfangende ITS-S einem der wenigstens zwei in der empfangenen DENM beschriebenen Objekte entspricht, und
bei positiver Bestimmung, Auslösen (570) kollisionsbezogener Maßnahmen.

3. Verfahren nach Anspruch 1 oder 2, wobei ein causeCode-Feld der DENM auf einen Kollisionsrisiko- oder Unfallwert eingestellt ist.

4. Verfahren nach Anspruch 3, wobei für den Fall, dass das causeCode-Feld der DENM auf ein Kollisionsrisiko eingestellt ist, ein subCauseCode-Feld der DENM auf einen PreCrash-Wert eingestellt ist, der eine unmittelbar bevorstehende Kollision mit einer Zeit bis zur Kollision unter einem Schwellenwert definiert.

5. Verfahren nach Anspruch 1 oder 2, wobei die sendende ITS-S eine straßenseitige Einheit (110) ist.

6. Verfahren nach Anspruch 1 oder 2, wobei wenigstens einer der Container (362, 363, 365) ein in ETSI TR 103 562 V2.1.1 definierter PerceivedObjectContainer ist.

7. Verfahren nach Anspruch 1 oder 2, wobei einer der Container (362, 363, 365) eine Stationskennung der sendenden ITS-S beinhaltet.

8. Verfahren nach Anspruch 1 oder 2, wobei einer der Container (362, 363, 365) eine Stationskennung einer von der sendenden ITS-S separaten ITS-S beinhaltet, die aus einer zuvor von der separaten ITS-S empfangenen Cooperative Awareness Messages (132) erhalten wurde.

9. Verfahren nach Anspruch 1 oder 2, wobei einer der Container (362, 363, 365) ein Klassifizierungsfeld beinhaltet, das eine Klassifizierung des entsprechenden beschriebenen Objekts bereitstellt, und/oder einer der Container Koordinaten des entsprechenden beschriebenen Objekts beinhaltet, wie sie in einem an der sendenden ITS-S fixierten lokalen Koordinatensystem ausgedrückt sind.

10. Verfahren nach Anspruch 1 oder 2, wobei die DENM (300) eine Angabe eines Kollisionspunktes beinhaltet und ferner einen Container für jedes im kritischen Bereich wahrgenommene Objekt beinhaltet.

11. Verfahren nach Anspruch 1 oder 2, wobei die DENM (300) ferner einen Kollisionsdatencontainer (366) beinhaltet, der eine oder mehrere vorhergesagte Trajektorien der Objekte und/oder eine Ursache der Kollision angibt.

12. Verfahren nach Anspruch 1 oder 2, wobei die DENM (300) einen Verweis auf eine vorherige DENM beinhaltet.

13. Station, ITS-S, eines intelligenten Verkehrssystems, ITS, (110, 240, 241, 242) mit wenigstens einem Mikroprozessor, der dazu eingerichtet ist, das Verfahren nach einem der Ansprüche 1 bis 12 auszuführen.

14. Nichtflüchtiges computerlesbares Medium, das ein Programm speichert, das, wenn es von einem Mikroprozessor oder Computersystem in einer Station, ITS-S, eines intelligenten Verkehrssystems, ITS, ausgeführt wird, die ITS-S veranlasst, das Verfahren nach einem der Ansprüche 1-12 durchzuführen.

## Revendications

1. Procédé de communication dans un système de transport intelligent, ITS, comprenant, au niveau d'une station d'ITS, ITS-S, (110) d'origine :
en réponse à la détection (510) d'une collision ou d'un risque de collision au niveau d'un point de collision entre au moins deux objets (150, 151, 152), l'envoi (520) d'un message (300) de notification environnementale décentralisée d'avertissement de collision, DENM,
dans lequel le DENM inclut une description (361) de la STI-S d'origine et, en outre,
au moins deux conteneurs (362, 363, 365) décrivant les au moins deux objets, respectivement, et un ou plusieurs conteneurs pour un ou plusieurs objets qui sont perçus dans une zone critique autour du point de collision et qui ne sont pas directement impliqués dans la collision.

2. Procédé de communication dans un système de transport intelligent, ITS, comprenant, au niveau d'une station d'ITS, ITS-S (240, 241, 242) réceptrice :
la réception (550), à partir d'une ITS-S (110) d'origine, d'un message (300) de notification environnementale décentralisée d'avertissement de collision, DENM, avertissant d'une collision ou d'un risque de collision au niveau d'un point de collision entre
au moins deux objets (150, 151, 152), dans lequel le DENM inclut une description (361) de l'ITS-S d'origine et, en outre, au moins deux conteneurs (362, 363, 365) décrivant les au moins deux objets, respectivement, et un ou plusieurs conteneurs pour un ou plusieurs objets qui sont perçus dans une zone critique autour du point de collision et qui ne sont pas directement impliqués dans la collision, la détermination (560) si oui ou non l'ITS-S réceptrice correspond à l'un des au moins deux objets décrits dans le DENM reçu, et
en cas de détermination positive, le déclenchement (570) de mesures liées à une collision.

3. Procédé selon la revendication 1 ou 2, dans lequel un champ causeCode du DENM est réglé sur une valeur Risque de Collision ou Accident.

4. Procédé selon la revendication 3, dans lequel, dans le cas où le champ causeCode du DENM est réglé sur un risque de collision, un champ subCauseCode du DENM est réglé sur une valeur PreCrash définissant une collision imminente avec un temps avant collision inférieur à un seuil.

5. Procédé selon la revendication 1 ou 2, dans lequel l'ITS-S d'origine est une unité côté route (110).

6. Procédé selon la revendication 1 ou 2, dans lequel au moins l'un des conteneurs (362, 363, 365) est un conteneur d'objet perçu PerceivedObjectContainer tel que défini dans l'ETSI TR 103 562 V2.1.1.

7. Procédé selon la revendication 1 ou 2, dans lequel l'un des conteneurs (362, 363, 365) inclut un identifiant de station de l'ITS-S d'origine.

8. Procédé selon la revendication 1 ou 2, dans lequel l'un des conteneurs (362, 363, 365) inclut un identifiant de station d'une ITS-S distincte de l'ITS-S d'origine et obtenu à partir d'un message (132) de sensibilisation coopératif précédemment reçu de l'ITS-S distincte.

9. Procédé selon la revendication 1 ou 2, dans lequel l'un des conteneurs (362, 363, 365) inclut un champ de classification fournissant une classification de l'objet décrit correspondant et/ou l'un des conteneurs inclut des coordonnées de l'objet décrit correspondant telles qu'exprimées dans une trame de coordonnées locales fixée à l'ITS-S d'origine.

10. Procédé selon la revendication 1 ou 2, dans lequel le DENM (300) inclut une indication d'un point de collision, et inclut en outre un conteneur pour chaque objet perçu dans la zone critique.

11. Procédé selon la revendication 1 ou 2, dans lequel le DENM (300) inclut en outre un conteneur (366) de données de collision indiquant une ou plusieurs trajectoires prédites des objets et/ou une cause de la collision.

12. Procédé selon la revendication 1 ou 2, dans lequel le DENM (300) inclut un lien vers un DENM précédent.

13. Station, ITS-S, (110, 240, 241, 242) de système de transport intelligent, ITS, comprenant au moins un microprocesseur configuré pour mettre en œuvre le procédé selon l'une quelconque des revendications 1 à 12.

14. Support non transitoire lisible par ordinateur stockant un programme qui, lorsqu'il est exécuté par un microprocesseur ou un système informatique dans une station, ITS-S, de système de transport intelligent, ITS, amène l'ITS-S à réaliser le procédé selon l'une quelconque des revendications 1 à 12.
